# EUROPÄISCHE PATENTANMELDUNG

(11) **EP 4 459 010 A1**
(43) Veröffentlichungstag der Anmeldung: **06.11.2024**
(21) Anmeldenummer: 23171120.1
(22) Anmeldetag: 02.05.2023
(51) Int. Cl.: C25B 3/07, C25B 3/23, C25B 11/031, C25B 11/042, C25B 1/04, H01M 4/32, C25D 9/06, C25D 11/34

(54) **HERSTELLUNG EINER STABILEN AKTIVIERTEN NICKELOXIDHYDROXID-SCHAUM-ELEKTRODE**

(71) Anmelder: Evonik Operations GmbH, 45128 Essen (DE)
(72) Erfinder: Die Erfindernennung liegt noch nicht vor
(74) Vertreter: Evonik Patent Association

(57) **Zusammenfassung**

Die Erfindung betrifft ein Verfahren, mit welchem Metallelektroden und Metallschaumelektroden, insbesondere Nickelelektroden und vor allem Nickelschaumelektroden, elektrochemisch aktiviert werden können. Die Erfindung betrifft ferner Metallelektroden und Metallschaumelektroden, insbesondere Nickelelektroden und vor allem Nickelschaumelektroden, welche nach dem Verfahren zur elektrochemischen Aktivierung erhalten wurden. Des Weiteren betrifft die Erfindung die Verwendung der nach dem erfindungsgemäßen Verfahren aktivierten Metallelektroden und Metallschaumelektroden, insbesondere Nickelelektroden und vor allem Nickelschaumelektroden, in elektrochemischen Reaktionen, Elektrolyse organischer Verbindungen, Katalyse organo-chemischer Reaktionen sowie der Wasserelektrolyse.

## Beschreibung

Die Erfindung betrifft ein Verfahren, mit welchem Metallelektroden und Metallschaumelektroden, insbesondere Nickelelektroden und vor allem Nickelschaumelektroden, elektrochemisch aktiviert werden können. Die Erfindung betrifft ferner Metallelektroden und Metallschaumelektroden, insbesondere Nickelelektroden und vor allem Nickelschaumelektroden, welche nach dem Verfahren zur elektrochemischen Aktivierung erhalten wurden. Des Weiteren betrifft die Erfindung die Verwendung der nach dem erfindungsgemäßen Verfahren aktivierten Metallelektroden und Metallschaumelektroden, insbesondere Nickelelektroden und vor allem Nickelschaumelektroden, in elektrochemischen Reaktionen, Elektrolyse organischer Verbindungen, Katalyse organo-chemischer Reaktionen sowie der Wasserelektrolyse.

Metallelektroden und Metallschaumelektroden, insbesondere Nickelelektroden und vor allem Nickelschaumelektroden, sind wegen ihrer hohen Porosität, Leitfähigkeit, mechanischen Stabilität und chemischen Beständigkeit in weitgehenden Anwendungsbereichen sehr gefragt.

Bislang ist im Stande der Technik nur ein elektrokatalytisches Verfahren zur Aktivierung von Nickelschaumelektroden bekannt, das auf wechselnder Polarität zweier Nickelelektroden beruht. Diese Aktivierung verläuft unter Einsatz von Lösungen aus 0,05 M - 0,1 M NiSO₄(aq) und 0,1 M NaOAc(aq) oder 0,1 M KOAc(aq), unter Zugabe von Base in Konzentrationen von 10⁻⁵ M bis 1 mM KOH(aq) oder 5 mM NaOH(aq) (G. W. D. Briggs, E. Jones, W. F. K. Wynne-Jones, Trans. Faraday Soc. 1955, 51, 1433-1442; B. V. Lyalin, V. A. Petrosyan, Russ. Chem. Bull. 2004, 53, 688-692; W. Jud, C. A. Salazar, J. Imbrogno, J. Verghese, S. M. Guinness, J.-N. Desrosiers, C. O. Kappe, D. Cantillo, Org. Process Res. Dev. 2022, 26, 1486-1495, H.-J. Schäfer, J. Kaulen, Tetrahedron 1982, 38, 3299-3308). In allen bekannten Fällen erfordert die Aktivierung einen Polwechsel zwischen zwei Nickelelektroden alle 5 bis 30 Sekunden, soweit näher angegeben.

Von Nachteil dieser bekannten Aktivierungsmethode ist die geringe Reproduzierbarkeit, insbesondere für gereinigte Nickelschaumelektroden. So führt die herkömmliche Aktivierungsmethode insbesondere bei Nickelschaumelektroden, die nach elektrochemischen Oxidationen gereinigt werden, nicht reproduzierbar zu stabilen Nickeloxyhydroxiden.

Ferner ist der Einsatz eines Polwechslers erforderlich. Dies erweitert signifikant die Komplexität für die elektronische Peripherie des gewöhnlich galvanostatischen Aufbaus. Darüber hinaus sind zwei Nickelelektroden erforderlich, obwohl nur eine für die anschließende elektrochemische Reaktion eingesetzt wird. Die Hälfte der abgeschiedenen Nickelspezies entfällt also somit auf eine Elektrode, die in der Reaktion nicht zum Einsatz kommen wird, da nur die zuletzt anodisch polarisierte Elektrode eine äußere NiO(OH) Schicht trägt.

Es ist eine Aufgabe der vorliegenden Erfindung ein Verfahren zur Aktivierung von Metallelektroden zur Verfügung zu stellen, welches die Nachteile des aus dem Stande der Technik bekannten Verfahrens zur Aktivierung von Metallelektroden und Metallschaumelektroden, insbesondere Nickelelektroden und vor allem Nickelschaumelektroden nicht oder in verminderter Form aufweist.

Diese Aufgabe wurde durch den Gegenstand der Patentansprüche sowie der Beschreibung gelöst.

Die vorliegende Erfindung betrifft ein Verfahren zur elektrochemischen Aktivierung von Metallelektroden umfassend die Schritte:
(a) in Kontakt bringen der Metallelektrode mit Base und
(b) Aktivierung der gemäß Schritt (a) vorbehandelten Metallelektrode.

Das erfindungsgemäße Verfahren ermöglicht die effiziente Aktivierung einer einzigen Metallelektrode, insbesondere Nickelelektrode bzw. Nickelschaumelektrode ungeteilt und im Gleichstrom, ohne dabei eine Umpolung zweier Metallelektroden, insbesondere zweier Nickelelektroden zu benötigen. Ein Polwechsler kann bei Einsatz des erfindungsgemäßen Verfahrens entfallen, so dass der Aufbau der Anlage vereinfacht wird.

Ferner ermöglicht das erfindungsgemäße Verfahren insbesondere eine reproduzierbare Aktivierung von Metallschaumelektroden, insbesondere Nickelschaumelektroden nach ihrem Einsatz in elektroorganischen Oxidationen. Die Reinigung von Schaumelektroden gestaltet sich als schwieriger im Vergleich zu Plattenelektroden, weshalb die bisherige Methode für ihre Aktivierung schlechter geeignet schien. Diese lassen sich nicht einfach polieren, wie es bei Plattenelektroden der Fall ist.

Somit bietet das erfindungsgemäß beanspruchte Verfahren einen sehr guten Zugang zu aktivierten Nickeloberflächen, mit gesteigerter Reproduzierbarkeit beim Einsatz gereinigter Nickelschäume bzw. Nickelschaumelektroden. Insbesondere ermöglicht das erfindungsgemäße Verfahren die reproduzierbare Aktivierung von (gereinigten) Nickelschäumen und Nickel-Plattenelektroden. Abhängig vom Ausmaß der Verschmutzung kann dies die Lebensdauer der Elektroden verlängern.

Aktivierte Nickelschäume sind elementar für eine erfolgreiche elektrochemische Oxidation vieler Substanzen, u.a. (a)zyklischer Alkohole und Ketone (H.-J. Schäfer, Electrochem. Top. Curr. Chem. 1987, 142, 101-129). Die vorliegende Erfindung erlaubt demnach eine flexible und vereinfachte und Methode, Nickelschäume zu aktivieren.

Ein weiterer Vorteil des erfindungsgemäßen Verfahrens ist darin zu sehen, dass in der Benetzung der Metallelektrode, insbesondere der Nickelelektrode nur sehr geringe Volumina einer Base erforderlich sind und zudem die eingesetzte Base kontinuierlich für diesen Zweck verwendet werden kann. Weitere Vorteile bestehen in der Flexibilität im Einsatz verschiedener Aktivierungslösungen, in der Eignung der Reaktionsbedingungen zur industrierelevanten Skalierung der Aktivierung sowie der Möglichkeit des Einsatzes der großen aktivierten Nickeloberfläche für verschiedene Anwendungen, wie z.B. in der Katalyse oder der Elektrolyse / Batterietechnologie.

Das erfindungsgemäße Verfahren ermöglicht schließlich auch den Einsatz gebrauchter Nickelschäume für elektroorganische Oxidationen an aktivierten Nickeloberflächen. Die Aktivierung im Gleichstrom ermöglicht eine kontrollierte, rapide Aktivierung und umgeht die abgeschiedenen Nickelreste auf der zweiten Elektrode.

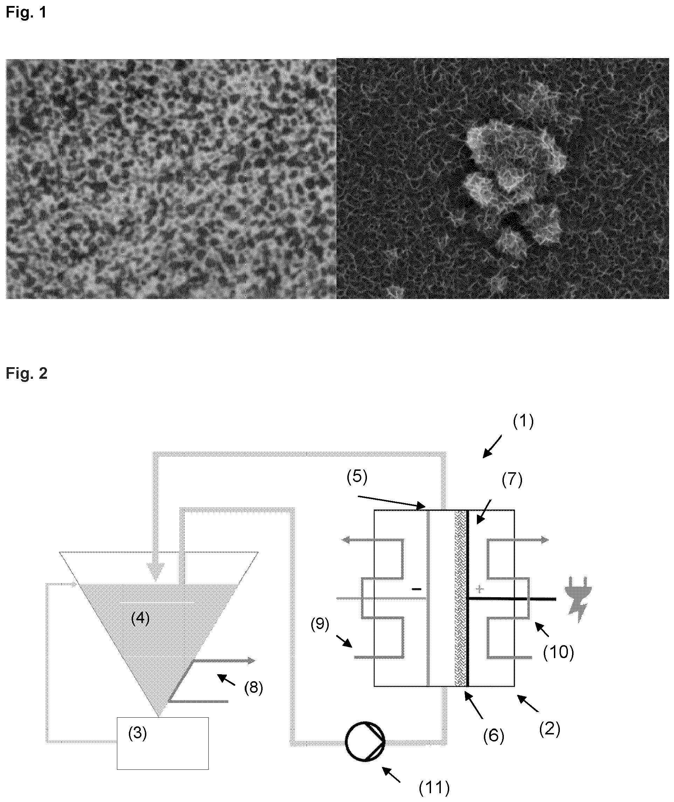

Figur 1 zeigt links eine Rasterelektronenmikroskop-Aufnahme (SEM) der aktivierten Nickeloxyhyroxid-Oberfläche mit der herkömmlichen Aktivierungsmethode (entnommen von G. W. D. Briggs, E. Jones, W. F. K. Wynne-Jones, Trans. Faraday Soc. 1955, 51, 1433-1442) und rechts eine SEM-Aufnahme der aktivierten Oberfläche erhalten nach dem erfindungsgemäßen Verfahren. Ein feinporöses Fasernetz ist in beiden Fällen erkennbar. Die herkömmliche Aktivierungsmethode führte bei Nickelschäumen, die nach elektrochemischen Oxidationen gereinigt wurden, somit nicht reproduzierbar zu stabilen Nickeloxyhydroxiden. Dies zeigte sich schon rein optisch an einer ausbleibenden Schwarzfärbung.

Figur 2 veranschaulicht eine Durchflusselektrolysezelle zur Durchführung eines Verfahrens unter Verwendung einer aktivierten Metallelektrode gemäß der vorliegenden Erfindung.

Figur 3 zeigt eine graphische Auswertung der Parameter-Ergebnisse mit einer Auftragung entsprechend der qNMR-Ausbeuten von 3-Ethyladipinsäure nach der elektrochemischen Oxidation von 4-Ethylcyclohexanol unter Verwendung einer aktivierten Metallelektrode gemäß der vorliegenden Erfindung.

Figuren 4 und 5 veranschaulichen die qNMR Ausbeute-Änderung von 3-Propyladipinsäure ohne und mit Zuführung von 4-Propylcyclohexanon im Verlauf der applizierten Ladung unter Verwendung einer aktivierten Metallelektrode gemäß der vorliegenden Erfindung.

Das in Kontakt bringen der Metallelektrode mit Base hat eine doppelte Funktion: Sie reinigt einerseits die Oberfläche und beschleunigt andererseits an der Oberfläche eine rapide Ausbildung einer Metalloxyhydroxid-Schicht, insbesondere einer Nickeloxyhydroxid-Schicht.

Für weitergehende Oxidationsreaktionen an entsprechend aktivierten Metalloxyhydroxid-Anoden, insbesondere Nickeloxyhydroxid-Anode (Ni(O)OH) kann es vorteilhaft sein, eine basische Umgebung, beispielsweise verdünnte Natronlauge als Elektrolyt, zu wählen, um den Katalysator während der Reaktion aktiv zu halten.

In einer bevorzugten Ausführungsform des erfindungsgemäßen Verfahrens erfolgt in Schritt (b) die Aktivierung der gemäß Schritt (a) vorbehandelten Metallelektrode ohne Umpolung der Elektrode.

Als Metallelektroden kommen in dem erfindungsgemäßen Verfahren bevorzugt Elektroden auf der Basis von Nickel, Cobalt und ggf. Eisen in dem erfindungsgemäßen Verfahren zum Einsatz, wobei die Metallelektrode bevorzugt 0 bis 100 Gew.-% Nickel und 100 bis 0 Gew.-% Cobalt aufweist, jeweils bezogen auf den Gesamtgehalt von Nickel und Cobalt in der Elektrode, oder 10 bis 100 Gew.-% Nickel und 0 bis 90 Gew.-% Eisen aufweist, jeweils bezogen auf den Gesamtgehalt von Nickel und Eisen in der Elektrode.

Der Gehalt anderer Metalle in der Metallelektrode ist bevorzugt gleich oder kleiner als 10 Gew.-%, besonders bevorzugt gleich oder kleiner 5 Gew.-%, ganz besonders bevorzugt gleich oder kleiner 2 Gew.-% und noch weiter bevorzugt gleich oder kleiner 1 Gew.-%, jeweils bezogen auf den Gesamtmetallgehalt.

Bevorzugt enthält die Metallelektrode höchstens jeweils bis zu 1 Gew.-%, besonders bevorzugt höchstens jeweils bis zu 0,1 Gew.-% und noch weiter bevorzugt höchstens jeweils 0,01 Gew.-% an V, Wo und Mo. Es ist zu beachten, dass diese Metalle insbesondere in alkalisch-wässrigen Emulsionen einer Korrosion unterliegen.

Besonders bevorzugt kommen zum Einsatz in dem erfindungsgemäßen Verfahren Metallelektroden in Betracht, die wenigstens 80 Gew.-%, bevorzugt wenigstens 90 Gew.-%, besonders bevorzugt wenigstens 95 Gew.- %, Nickel aufweisen, jeweils bezogen auf das Gesamtgewicht der Metalle in der Elektrode.

Die Metalle in Nickel und/oder Cobalt und gegebenenfalls Eisen können in der Metallelektrode auf einem Substrat vorliegen, wobei das Substrat insbesondere wenigstens ein Material ausgewählt ist aus der Gruppe bestehend aus Stahl, Kupfer, Titan und Kohlenstoff, vorzugsweise Graphit.

Die Metallelektrode kann bevorzugt mit wenigstens einem Element der 5. und/oder 6. Hauptgruppe dotiert sein, besonders bevorzugt mit einem oder mehreren Elementen, vorzugsweise einem Element welche(s) ausgewählt ist/sind aus der Gruppe bestehend aus Phosphor, Arsen, Selen und Schwefel.

Die Gehaltsangaben der Dotierung beziehen sich auf den Elementarzustand der Dotierung bezogen auf die Masse des Metalls der Elektrode.

Sofern die Metallelektrode mit Phosphor dotiert ist, kann diese bevorzugt 2 bis 10 Gew.-% Phosphor, besonders bevorzugt 3 bis 9 Gew.-% und ganz besonders bevorzugt 4 bis 9 Gew.-% aufweisen, wobei Phosphor jeweils als Element betrachtet und auf die Metallmasse der Elektrode bezogen ist.

Die Gehaltsbestimmung der Phosphordotierung kann bevorzugt gemäß DIN EN ISO 5427, Anhang D.1 durchgeführt werden

Bevorzugt weist die Metallelektrode eine Dicke von mehreren Millimetern auf, mehr bevorzugt von mehr als 3 mm, weiter mehr bevorzugt mehr als 5 mm und insbesondere bevorzugt gleich oder dicker als 6 mm.

Bevorzugt kommt in dem erfindungsgemäßen Verfahren eine Ni(O)OH-Schaumelektrode als Metallelektrode zum Einsatz, die vorzugsweise mindestens zu 80 Gew.-%, besonders bevorzugt mindestens 85, 90, 95, 98 oder 99 Gew.- %, ganz besonders bevorzugt mindestens 99,9, und noch weiter bevorzugt mindestens 99,99 Gew.-% Nickel enthält, jeweils bezogen auf den Metallgehalt der Ni(O)OH-Schaumelektrode.

Vorzugsweise wird die Metallelektrode durch in Kontakt bringen mit Base, vorzugsweise wenigstens einer anorganischen Base und/oder wenigstens einer organischen Base vorbehandelt.

Zum Einsatz für den Schritt des in Kontakt bringen eignen sich übliche, dem Fachmensch bekannten anorganischen und organischen Basen. Vorzugsweise kommen eine oder mehrere Basen, vorzugsweise eine Base, unabhängig voneinander ausgewählt aus der Gruppe bestehend aus N(R^{A})₄OH, N(R^{A})₄acetat, mit R^{A} jeweils unabhängig voneinander H oder C₁₋₄-Alkyl, linear oder verzweigt, NaOH, Natriumacetat, KOH, Kaliumacetat, LiOH, Lithiumacetat, Na₂CO₃, K₂CO₃ und Li₂CO₃ zur Anwendung, besonders bevorzugt ausgewählt aus der Gruppe bestehend aus NaOH und KOH.

Die Base wird im Schritt des in Kontakt bringen bevorzugt in wässriger Lösung eingesetzt, wobei die Konzentration der Base vorzugsweise 10 mM bis 10 M, besonders bevorzugt 0,2 bis 5 M, ganz besonders bevorzugt 0,5 bis 1,5 M und noch weiter bevorzugt 1 ± 0,1 M beträgt.

Das in Kontakt bringen der Metallelektrode mit Base kann insbesondere durch Aufsprühen, Eintauchen, im Strahl oder im Fluss erfolgen.

Die Metallelektrode und die Base können über einen weiteren Temperaturbereich miteinander in Kontakt gebracht werden. Bevorzugt erfolgt das in Kontakt bringen der Metallelektrode mit Base bei einer Temperatur von 10 bis 40°C, besonders bevorzugt bei 18 bis 27°C erfolgt.

Gemäß dem erfindungsgemäßen Verfahren kann vorteilhafterweise eine Aktivierung der Metallelektrode durchgeführt werden, wobei sich für diesen Schritt insbesondere eines oder mehrere Salze von Nickel und/oder Cobalt und gegebenenfalls Eisen eignen.

Sofern Salze von Nickel bzw. Cobalt zum Einsatz kommen, eignen sich insbesondere die Salze ausgewählt aus der Gruppe bestehend aus Ni₂SO₄ und CoSO₄.

Zur Aktivierung der Metallelektrode können das Salz oder die Salze bevorzugt in wässriger basischer Lösung vorliegen, vorzugsweise in einer Konzentration von 0,05 bis 0,15 M.

Hierbei kommen übliche, dem Fachmenschen bekannte Basen in Betracht. Vorzugsweise kommen eine oder mehrere Basen, insbesondere eine Base zur Anwendung, die unabhängig voneinander ausgewählt sind aus der Gruppe bestehend aus N(R^{A})₄OH, N(R^{A})₄acetat, mit R^{A} jeweils unabhängig voneinander H oder C₁₋₄-Alkyl, linear oder verzweigt, NaOH, Natriumacetat, KOH, Kaliumacetat, LiOH, Lithiumacetat, Na₂CO₃, K₂CO₃ und Li₂CO₃, besonders bevorzugt ausgewählt aus der Gruppe bestehend aus NaOH und KOH.

Die Konzentration der Base bei der Aktivierung der Metallelektrode beträgt bevorzugt 10 mM bis 10 M, bevorzugt 0,2 bis 5 M, besonders bevorzugt 0,5 bis 1,5 M, ganz besonders bevorzugt 1 ± 0,1 M.

Vorzugsweise erfolgt die Aktivierung der Metallelektrode bei einer Ladungsmenge von 2 bis 10 Coulomb, vorzugsweise 5 bis 7 Coulomb erfolgt.

Die Aktivierung der Metallelektrode kann über einen weiten Temperaturbereich erfolgen. Vorzugsweise erfolgt die Aktivierung der Metallelektrode bei einer Temperatur von 10 bis 40°C, besonders bevorzugt bei 18 bis 27°C erfolgt.

Ein weiterer Gegenstand der vorliegenden Erfindung ist eine aktivierte Metallelektrode insbesondere erhältlich nach dem erfindungsgemäßen Verfahren.

Ein weiterer Gegenstand der vorliegenden Erfindung ist eine aktivierte Metallelektrode, insbesondere erhältlich oder erhalten nach dem erfindungsgemäßen Verfahren, zur Durchführung von Oxidationsreaktionen organischer Komponenten, zur Wasserelektrolyse, in Batterien oder in der Katalyse.

Die nach dem erfindungsgemäßen Verfahren aktivierte Metallelektrode kann bevorzugt in einer Batch-Elektrolysezelle oder in einer kontinuierlich durchströmten Elektrolysezelle, vorzugsweise in einer kontinuierlich durchströmten Elektrolysezelle zum Einsatz kommen.

Die nach dem erfindungsgemäßen Verfahren aktivierte Metallelektrode kann bevorzugt in einer ungeteilten Elektrolysezelle eingesetzt werden.

Weitere bevorzugte Ausführungsformen der vorliegenden Erfindung sind nachfolgende Ausführungsformen:
Ausführungsform 1: Ein Verfahren zur elektrochemischen Aktivierung von Metallelektroden umfassend die Schritte
   (a) in Kontakt bringen der Metallelektrode mit Base und
   (b) Aktivierung der gemäß Schritt (a) vorbehandelten Metallelektrode, vorzugsweise Aktivierung der gemäß Schritt (a) vorbehandelten Metallelektrode ohne Umpolung.
Ausführungsform 2: Das Verfahren nach Ausführungsform 1, wobei die Metallelektrode 0 bis 100 Gew.-% Nickel und 100 bis 0 Gew.-% Cobalt, jeweils bezogen auf den Gesamtgehalt von Nickel und Cobalt in der Elektrode, oder 10 bis 100 Gew.-% Nickel und 0 bis 90 Gew.-% Eisen aufweist, jeweils bezogen auf den Gesamtgehalt von Nickel und Eisen in der Elektrode.
Ausführungsform 3: Das Verfahren nach Ausführungsform 1 oder 2, wobei die Metallelektrode als Metall wenigstens 80 Gew.-%, bevorzugt wenigstens 90 Gew.-%, besonders bevorzugt wenigstens 95 Gew.- %, Nickel aufweist, jeweils bezogen auf das Gesamtgewicht der Metalle in der Elektrode.
Ausführungsform 4: Das Verfahren nach mindestens einer der vorhergehenden Ausführungsformen, wobei die Metallelektrode Nickel und/oder Cobalt und gegebenenfalls Eisen auf einem Substrat aufweist.
Ausführungsform 5: Das Verfahren nach Ausführungsform 4, wobei das Substrat wenigstens ein Material ist, ausgewählt aus der Gruppe bestehend aus Stahl, Kupfer, Titan und Kohlenstoff, vorzugsweise Graphit.
Ausführungsform 6: Das Verfahren nach mindestens einer der vorhergehenden Ausführungsformen, wobei die Metallelektrode mit wenigstens einem Element der 5. und/oder 6. Hauptgruppe dotiert ist.
Ausführungsform 7: Das Verfahren nach Ausführungsform 6, wobei die Metallelektrode mit einem oder mehreren Elementen, vorzugsweise einem Element dotiert ist, welche(s) ausgewählt ist/sind aus der Gruppe bestehend aus Phosphor, Arsen, Selen und Schwefel.
Ausführungsform 8: Das Verfahren nach Ausführungsform 6 oder 7, wobei die Metallelektrode 2 bis 10 Gew.-% Phosphor, bevorzugt 3 bis 9 Gew.-% und besonders bevorzugt 4 bis 9 Gew.-% aufweist, wobei Phosphor jeweils als Element betrachtet und auf die Metallmasse der Elektrode bezogen ist.
Ausführungsform 9: Das Verfahren nach mindestens einer der vorhergehenden Ausführungsformen, wobei die Metallelektrode mehrere Millimeter dick ist, vorzugsweise mehr als 3 mm, besonders bevorzugt mehr als 5 mm, ganz besonders bevorzugt gleich oder dicker als 6 mm.
Ausführungsform 10: Das Verfahren nach mindestens einer der vorhergehenden Ausführungsformen, wobei die Metallelektrode eine Ni(O)OH-Schaumelektrode ist.
Ausführungsform 11: Das Verfahren nach Ausführungsform 10, wobei die Ni(O)OH-Schaumelektrode als Metall mindestens zu 80 Gew.-%, bevorzugt mindestens 85, 90, 95, 98 oder 99 Gew.- %, besonders bevorzugt mindestens 99,9, insbesondere bevorzugt mindestens 99,99 Gew.-% Nickel enthält, jeweils bezogen auf den Metallgehalt der Ni(O)OH-Schaumelektrode.
Ausführungsform 12: Das Verfahren nach mindestens einer der vorhergehenden Ausführungsformen, wobei die Metallelektrode durch in Kontakt bringen mit Base, vorzugsweise wenigstens einer anorganischen Base und/oder wenigstens einer organischen Base vorbehandelt wird.
Ausführungsform 13: Das Verfahren nach Ausführungsform 12, wobei eine oder mehrere Basen, vorzugsweise eine Base, unabhängig voneinander ausgewählt sind aus der Gruppe bestehend aus N(R^{A})₄OH, N(R^{A})₄acetat, mit R^{A} jeweils unabhängig voneinander H oder C₁₋₄-Alkyl, linear oder verzweigt, NaOH, Natriumacetat, KOH, Kaliumacetat, LiOH, Lithiumacetat, Na₂CO₃, K₂CO₃ und Li₂CO₃, besonders bevorzugt ausgewählt aus der Gruppe bestehend aus NaOH und KOH.
Ausführungsform 14: Das Verfahren nach einer der Ausführungsformen 12 oder 13, wobei die Base in wässriger Lösung eingesetzt wird.
Ausführungsform 15: Das Verfahren nach einer der Ausführungsformen 12 bis 14, wobei die Konzentration der Base 10 mM bis 10 M, bevorzugt 0,2 bis 5 M, besonders bevorzugt 0,5 bis 1,5 M, ganz besonders bevorzugt 1 ± 0,1 M beträgt.
Ausführungsform 16: Das Verfahren nach einer der Ausführungsformen 12 bis 15, wobei das in Kontakte bringen der Metallelektrode mit Base durch Aufsprühen, Eintauchen, im Strahl oder im Fluss erfolgt.
Ausführungsform 17: Das Verfahren nach mindestens einer der Ausführungsform 12 bis 15, wobei das in Kontakt bringen der Metallelektrode bei einer Temperatur von 10 bis 40°C, vorzugsweise bei 18 bis 27°C erfolgt.
Ausführungsform 18: Das Verfahren nach mindestens einer der vorhergehenden Ausführungsformen, wobei eine Aktivierung der Metallelektrode gemäß Schritt (b) vor dem Einsatz in einer Oxidationsreaktion erfolgt.
Ausführungsform 19: Das Verfahren nach Ausführungsform 18, wobei die Aktivierung der Metallelektrode durch eines oder mehrere Salze von Nickel und/oder Cobalt und gegebenenfalls Eisen erfolgt.
Ausführungsform 19: Das Verfahren nach Ausführungsform 19, wobei die Salze ausgewählt sind aus der Gruppe bestehend aus Ni₂SO₄ und/oder CoSO₄.
Ausführungsform 20 Das Verfahren nach Ausführungsform 18 oder 19, wobei das Salz oder die Salze in wässriger basischer Lösung vorliegen.
Ausführungsform 21: Das Verfahren nach einer der Ausführungsformen 18 bis 20, wobei die Konzentration der Salze 0,05 bis 0,15 M beträgt.
Ausführungsform 22: Das Verfahren nach einer der Ausführungsformen 20 oder 21, wobei eine oder mehrere Basen, vorzugsweise eine Base, unabhängig voneinander ausgewählt sind aus der Gruppe bestehend aus N(R^{A})₄OH, N(R^{A})₄acetat, mit R^{A} jeweils unabhängig voneinander H oder C₁₋₄-Alkyl, linear oder verzweigt, NaOH, Natriumacetat, KOH, Kaliumacetat, LiOH, Lithiumacetat, Na₂CO₃, K₂CO₃ und Li₂CO₃, besonders bevorzugt ausgewählt aus der Gruppe bestehend aus NaOH und KOH.
Ausführungsform 23: Das Verfahren nach einer der Ausführungsformen 20 bis 22, wobei die Konzentration der Base 10 mM bis 10 M, bevorzugt 0,2 bis 5 M, besonders bevorzugt 0,5 bis 1,5 M, ganz besonders bevorzugt 1 ± 0,1 M beträgt.
Ausführungsform 24: Das Verfahren nach einer der Ausführungsformen 20 bis 23, wobei die Aktivierung der Metallelektrode bei einer Ladungsmenge von 2 bis 10 Coulomb, vorzugsweise 5 bis 7 Coulomb erfolgt.
Ausführungsform 25: Das Verfahren nach einer der Ausführungsformen 20 bis 24, wobei die Aktivierung der Metallelektrode bei einer Temperatur von 10 bis 40°C, vorzugsweise bei 18 bis 27°C erfolgt.
Ausführungsform 26: Aktivierte Metallelektrode insbesondere erhältlich nach einem Verfahren gemäß einer oder mehreren der Ausführungsformen 1 bis 25.
Ausführungsform 27: Verwendung einer Metallelektrode nach Ausführungsform 26 oder einer Metallelektrode erhalten nach einem Verfahren gemäß einer oder mehreren der Ausführungsformen 1 bis 25 zur Durchführung von Oxidationsreaktionen organischer Komponenten.
Ausführungsform 28: Verwendung einer Metallelektrode nach Ausführungsform 26 oder einer Metallelektrode erhalten nach einem Verfahren gemäß einer oder mehreren der Ausführungsformen 1 bis 25 zur Wasserelektrolyse.
Ausführungsform 29: Verwendung einer Metallelektrode nach Ausführungsform 26 oder einer Metallelektrode erhalten nach einem Verfahren gemäß einer oder mehreren der Ausführungsformen 1 bis 25 in Batterien.
Ausführungsform 30: Verwendung einer Metallelektrode nach Ausführungsform 26 oder einer Metallelektrode erhalten nach einem Verfahren gemäß einer oder mehreren der Ausführungsformen 1 bis 25 in der Katalyse.
Ausführungsform 31: Verwendung einer Metallelektrode nach Ausführungsform 26 oder einer Metallelektrode erhalten nach einem Verfahren gemäß einer oder mehreren der Ausführungsformen 1 bis 25 in einer Batch-Elektrolysezelle oder in einer kontinuierlich durchströmten Elektrolysezelle, vorzugsweise in einer kontinuierlich durchströmten Elektrolysezelle.
Ausführungsform 32: Verwendung einer Metallelektrode nach Ausführungsform 26 oder einer Metallelektrode erhalten nach einem Verfahren gemäß einer oder mehreren der Ausführungsformen 1 bis 25 in einer ungeteilten Elektrolysezelle ungeteilt ist.

Die folgenden Beispiele veranschaulichen die vorliegende Erfindung weiter, sind aber nicht als Einschränkung des Umfangs der Erfindung auszulegen.

### Beispiele:

### Allgemeine Informationen und Methoden

Chemikalien von analytischer Qualität wurden von gängigen Anbietern (wie TCI, Aldrich, Rotisolv, Fisher Chemical, VWR, Thermos scientific und Acros) bezogen und verwendet. Lösungsmittel wurden durch Standardmethoden wie Destillation oder Demineralisierung gereinigt.

Als Reaktionsbedingungen wurden, sofern nicht anders angegeben, Umgebungsdruck und Umgebungstemperatur verwendet.

Die für die Reaktionen applizierten Elektroden waren kommerziell erhältlich und enthalten kleine Kanäle auf der Einlass- und Auslassseite: Edelstahl (1.4571) und Recemat^{™} Nickelschaum. Sie passen zum Setup des IKA ElectraSyn flow 6-18. Für die Aktivierung wurde eine separate Blechelektrode (6x18 cm2) aus Edelstahl (1.4571) von der Universitätswerkstatt geschnitten. Als Galvanostat wurde ein TDK Lambda Genesys 750 W/1500 W Netzteil verwendet. Das Reaktionsgemisch wurde unter Verwendung einer Reglo Digital Masterflex^{™}-Schlauchpumpe (Modell-Nr. 78018-42) von Ismatec durch Ismapren-Schläuche (Größe 16) gepumpt. Ein Heizkreislauf wurde installiert und an eine IKA Kälte- und Umwälzthermostate WICO CBC 5 C (Modell RN41) angeschlossen.

Schmelzpunktbestimmung: Schmelzpunkte wurden mit einem Gerät vom Typ M-565 (Büchi, Essen, Deutschland) gemessen. Die Heizrate betrug 1°C pro Minute.

NMR-Spektroskopie: Ein Bruker Avance III 600 (Bruker, Sondenkopf: 5 mm TCI-CryoProbe-Kopf mit z-Gradient und ATM) NMR-Spektrometer wurde verwendet, um 1H (600 MHz) und ¹³C (151 MHz) Inverse Gated-Spektren bei 25°C aufzunehmen. Chemische Verschiebungen (δ) werden in Teilen pro Million (ppm) angegeben. Die Quantifizierung erfolgte durch Integration der jeweiligen Signale im ¹³C-Inverse-Gated-Spektrum gegen 1,3,5-Trimethoxybenzol als internen Standard (δ = (55,4±0,02) ppm). Als Referenz wurde das DMSO-d6-Signal gewählt (δ = 39,52 ppm).

Flüssigchromatographie: Die Photodioden-Array-Analyse wurde unter Verwendung eines DUGA-20A3-Geräts von Shimadzu durchgeführt, das mit einer C18-Säule von Knauer (Eurospher II, 100-5 C18, 150 × 4 mm) ausgestattet war. Die Säule wurde auf 25°C konditioniert und die Flussrate auf 1 ml/min eingestellt. Das wässrige Eluent wurde mit

Ameisensäure (0,8 ml/2,5 I) gepuffert und mit Aceton (5 Vol.-%) stabilisiert. Zur Herstellung der Proben wurde das Carbonsäureproduktgemisch aus dem Reaktionsgemisch durch Säure-Base-Extraktion mit Ethylacetat extrahiert, über MgSO₄ getrocknet und das Lösungsmittel verdampft. Das Produkt wurde filtriert (VWR 13 mm Spritzenfilter mit 0,45 µm PTFE-Membran), gelöst und in Acetonitril (MS-Qualität) verdünnt. Diese organische Lösung wurde durch Flüssigkeitschromatographie analysiert.

Hochauflösende Massenspektren wurden unter Verwendung eines G6545A Q-ToF (Agilent GmbH, Waldbronn, Deutschland) mit dualer AJS-Elektrospray-lonenquelle (Dual AJS ESI) erhalten. Die MS-Parameter waren wie folgt: Massenbereich: 80 bis 3200 m/z, Scanrate: 1 Spektrum s⁻¹, Zerstäuberdruck: 25 psig, Kapillarspannung: 3500 V, Fragmentor: 50 V, Skimmer: 45 V, Trockengastemperatur: 275°C, Trockengasfluss: 10 L min-1, Sheath-Gastemperatur: 350 °C, Sheath-Gasfluss: 10 L min-1. Die Massenkalibrierung wurde am Tag der Messung mit einem externen Standard durchgeführt. Die Massengenauigkeit der Messergebnisse ist besser als 5 ppm. Die chromatographische Trennung wurde auf einem 1260 Infinity II HPLC-System (Agilent GmbH, Waldbronn, Deutschland) mit G7111B 1260 Quaternary Pump, G7129A 1260 Vialsampler und G7116A 1260 Multicolumn Thermostat, ausgestattet mit einem Agilent EclipsePlus C18 RRHP (2,1 x 50 mm, 2,1 µm) durchgeführt Partikelgröße) analytische Säule. Elutionsmittel waren 98 % H2O mit 2 % ACN und 0,05 % Ameisensäure (Eluent A) und 2 % H2O mit 98 % ACN und 0,05 % Ameisensäure (Eluent B). Die folgende Gradientenelution wurde zur Trennung bei einer Flussrate von 200 µl min-1 angewendet: Beginnend bei 10 % B für 1 min, gefolgt von einer linearen Erhöhung auf 95 % B bei 10 min, Beibehaltung von 95 % B bis 30 min, bevor es weitergeht, zurück zu 10 % B bei 33 min. Die Säule wurde vor der nächsten Messung 15 min lang bei 10 % B äquilibriert. Das Injektionsvolumen betrug 2 µl. Die Daten wurden mit der Agilent MassHunter Workstation LC/MS-Software Version 11.0 aufgezeichnet und die Datenanalyse wurde mit der Agilent MassHunter Workstation Qualitative Analysis-Software Version 10.0 durchgeführt.

MALDI TOF MS: Das Autoflex MALDI TOF Massenspektrometer von Bruker Daltonik GmbH (Fahrenheitstraße 4, 28359 Bremen, Deutschland) mit einem smartbeam^{™}II Nd:YAG Laser (355 nm) wurde verwendet. Das Bild wurde im linearen Modus gemessen. Als Matrix wurde 2-[(2E)-3-(4-tert-Butylphenyl)-2-methylprop-2-enyliden]malononitril (DCTB) verwendet.

Es wurde gemäß der nachfolgenden Beschreibung eine Elektrolysezelle mit aktivierter Nickelanode hergestellt und in den nachfolgenden Umsetzungen verwendet.

Es wurde eine Durchflusselektrolysezelle mit einer geometrischen anodischen Oberfläche von 108 cm² verwendet (Figur 2). Der modulare Aufbau der Zelle ferner enthaltend einen selbsttragenden Rahmen und einem Käfig für die Schaumelektrode - alle mit einer aktiven geometrischen Oberfläche von 108 cm² - machen diesen Elektrolyseur besonders interessant für skalierte Elektrolysen im Durchflussmodus. Außerdem wird die große Wärmeableitung durch Kanäle hinter den Elektroden ermöglicht, die eine bessere Temperierung ermöglichen als bei kleineren kommerziellen Durchflusselektrolyseuren, bei denen nur das Reservoir auf eine bestimmte Temperatur eingestellt werden kann.

Figur 2 zeigt das Schema des Reaktionsaufbaus in einer ungeteilten Durchflusselektrolysezelle mit Edelstahlkathode und Nickelschaumanode, die von einer Nickelplattenelektrode kontaktiert wird. Der Abstand zwischen den Elektroden betrug 3 mm. Der Kühlkreislauf verwendete Wasser zur Temperierung zwischen 25 und 50 °C. Das Reaktionsgemisch wurde mit einer Mischeinheit IKA Magic lab mit DR-Mischelement (IKA-Werke GmbH & Co. KG Staufen, Deutschland) emulgiert.

Aktivierung der Nickelanode:
Zunächst wurde eine Aktivierungslösung hergestellt bestehend aus 0,1 M NiSO₄(aq), 0,1 M NaOAc(aq) und 5 mM NaOH(aq). Diese Aktivierungslösung (420 mL) wurde in eine becherförmige Zelle aus Polymethylmethacrylat (PMMA) gefüllt. Eine Edelstahlelektrode (6x18 cm) wurde eingetaucht und angeschlossen. Vor dem vollständigen Eintauchen und Anschließen der Nickelschaumanode im Abstand von 10 mm wurde diese in 1 M Natronlauge getaucht oder gründlich damit gespült und anschließend abgetropft. Eine Stromdichte von 5,0 mA cm⁻² wurde für 30 min angelegt. Dies entspricht einer Ladung von 9 C cm⁻². Die Aktivierungslösung wurde bei 300 U/min gerührt. Anschließend wurde der aktivierte dunkle Nickelschaum mit entmineralisiertem Wasser gespült. Die Edelstahlkathode wurde durch kurzes Eintauchen in verdünnte Schwefelsäure (4M) gereinigt, dann mit Wasser gewaschen und mit Schleifpapier (Porengröße 300) behandelt, bis sie optisch homogen glänzte. Dann wurde die Zelle neu angeordnet. Obwohl REM-Bilder zeigten, dass der Reinigungsprozess die ursprüngliche Oberflächenmorphologie nicht vollständig wiederherstellte, konnte das oben beschriebene Aktivierungsverfahren auch auf die gereinigten Nickelschäume erfolgreich angewendet werden.

Durchführung der Durchflusszellenelektrolyse:
Es wurde der kommerziell erhältliche modulare Durchflusselektrolyseur IKA ESF 6-18 verwendet, wie vorstehend beschrieben. Dieser war ungeteilt mit einer Nickelschaumanode (Recemat^{™} RCM-Ni4753.05), verbunden durch ein Nickelblech, und einer Edelstahlkathode (1.4571), jeweils mit den Abmessungen 6 x 18 cm². Es wurde ein Polytetrafluorethylen (PTFE) Abstandshalter (0,4 mm) verwendet. Die Nickelschaumanode wurde wie vorstehend beschrieben aktivieret.

Das kommerziell erhältliche Mischgerät IKA magic LAB^{®} wurde an den Rührbehälter IKA magic PLANT^{®} angeschlossen. Darin wurde der Elektrolyt, bestehend aus NaOH(aq) (1 M) und dem jeweiligen cyclischen Edukt 4-Alkylcyclohexanol (1), emulgiert. Diese Mischeinheit verfügt über ein leistungsstarkes DR-Mischelement und pumpt die Flüssigkeit zyklisch in den Vorratsbehälter und von dort wieder zurück. Diese Durchflussrate beträgt 12.000 U/min (was ungefähr 70 L pro Stunde entspricht). Von dort speist eine Peristaltikpumpe die aufrechtstehende Durchflusszelle von unten. Ausgangsseitige Rohre sind mit dem Vorratsbehälter verbunden, wodurch der gebildete Wasserstoff sicher abgeführt werden kann. Eine vorgegebene Ladungsmenge sowie Stromdichte wurden angelegt und überwacht, wobei eine Python-Softwaresteuerung und der Galvanostat TDK Lambda Genesys verwendet wurden. Nach Beendigung der Elektrolyse wurde das Reaktionsgemisch in umgekehrter Strömungsrichtung aus dem Elektrolyseur gepumpt. Dann Methyl-tert-butylether (MTBE, 80 ml) und 1 M Natronlauge (80 ml) wurden verwendet, um die Zelle nacheinander zu reinigen. Alle Fraktionen wurden vereinigt und mittels Flüssig-Flüssig-Extraktion in einem 2L Perforator aufgearbeitet

Dabei wurden aus der basischen wässrigen Reaktionsmischung zunächst nichtsaure Komponenten mit MTBE extrahiert. Nach Ansäuern auf pH 1-2 wurden die Säuren mit Ethylacetat extrahiert. Die organischen Fraktionen wurden über MgSO₄ getrocknet und die Lösungsmittel entfernt. Die verbleibende Säurefraktion wurde gewogen und die Produkte quantitativ durch ¹³C Inverse Gated NMR-Spektroskopie analysiert. Als interner Standard wurde 1,3,5-Trimethoxybenzol (0,1 mmol) verwendet.

### Beispiel 1:

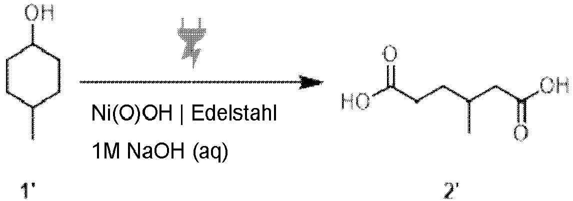

Es wurde eine anodische Oxidation von 4-Methylcyclohexanol (1') zu 3-Methyladipinsäure (2') in der vorstehend beschriebenen Durchflusszelle durchgeführt.

4-Methylcyclohexanol-Oxidation: 4-Methylcyclohexanol (1', 10 mmol, c = 0,1 M, Isomerengemisch) wurde mit Natronlauge (1 M) in einem Becherglas (V = 100 mL) vermischt. Die Zelle wurde mit einem externen IKA-HBC-5-Thermostaten auf 50 °C temperiert. Das Reaktionsgemisch wurde mit einer Flussrate von 61 mL min-1 durch den Elektrolyseur gepumpt. Die angewandte Stromdichte wurde dabei auf 5,0 mA cm-2 eingestellt, und insgesamt wurde eine Ladung von 8,0 F verwendet. Nach der Reaktion wurde das Produktgemisch gesammelt, tert-Butylmethylether durch die Zelle gepumpt und eine Säure-Base-Extraktion durchgeführt. Dazu wurde das basische Reaktionsmedium dreimal mit tert-Butylmethylether (je 100 mL) extrahiert, mit 4,5 M Schwefelsäure auf pH 1-2 angesäuert und viermal mit Ethylacetat (je 100 mL) extrahiert. Nach Trocknung über MgSO4 und anschließender Lösungsmittelentfernung wurde das Produktgemisch mittels 1H- und 13C-Inverse-Gated-NMR gegen 1,3,5-Trimethoxybenzol als internen Standard analysiert.

### Beispiel 2:

Zunächst erfolgte eine Synthese von 4-Ethylcyclohexanol gemäß der nachfolgenden Vorschrift. 4-Ethylphenol (100 g, 0,82 mol) wurde in Methanol (500 mL) gelöst, Ruthenium/Kohle (10 g, 5% Ru auf C) wurde in den 1-Liter-Autoklaven gegeben und eine Wasserstoffatmosphäre (10 bar) angelegt. Der Autoklav wurde auf 120 °C temperiert. Zur Kontrolle der Ausbeute an 4-Ethylcyclohexanol (1") wurden einmal täglich Proben (0,1 mL des Reaktionsmediums) entnommen. Die Produktbildung wurde gaschromatographisch verfolgt und die Reaktion gestoppt, wenn keine weitere Produktbildung beobachtet wurde. 4-Ethylphenol wurde von Sigma Aldrich gekauft, Ruthenium wurde von Heraeus Chemicals gekauft. 4-Ethylcyclohexanol (1") wurde im 200-g-Maßstab mit isolierten Ausbeuten von bis zu 95 % nach Vakuumdestillation synthetisiert.

Anschließend erfolgte die elektrochemische Oxidation von 4-Ethyl-cyclohexanol zu 3 Ethyladipinsäure gemäß nachfolgendem Schema 1

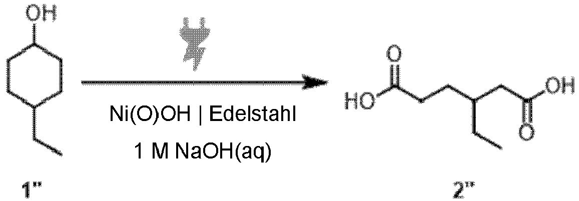

Hierbei wurde die Oxidation in einem *Design-of-Experiment* Screening Verfahren in Hinblick auf die Parameter Reaktionstemperatur, Flussrate, Konzentration des cyclischen Edukts und Stromdichte unterzogen. Auch hierbei wurde eine wie vorstehend aktivierte Nickelschaumanode und eine V5A Edelstahlplattenkathode eingesetzt. Die Reaktion erfolgt in einer halbstabilen Emulsion des cyclischen Edukts mit 1 M NaOH(aq), da sich die beiden Flüssigkeiten unter Standardbedingungen nicht mischen.

Für die Durchführung des Screening Verfahrens wurde dabei ein Aufbau Masterflex^{™} PharMed^{™} BPT, L/S 16, Röhrchen für den Langzeiteinsatz installiert. Zum Pumpen wurde eine Masterflex^{™} Ismatec^{™} Peristaltikpumpe 78018-42 verwendet. Zum kontinuierlichen Mischen wurde ein IKA Magic Lab / IKA Magic Plant System mit einem DR-Mischelement (IKA-Werke GmbH & Co. KG Staufen, Deutschland) verwendet. Bei allen Experimenten arbeitete das Mischsystem mit 12.000 U/min (≈ 70 L h-1 Umwälzrate), um eine optisch halbstabile Emulsion für die Zeit zu erreichen, die durch den Durchflusselektrolyseur und zurück in den Mischer gepumpt wird. Für alle Reaktionen wurde eine Ladung von 9 F verwendet.

Die Aufarbeitung des Reaktionsgemisches erfolgte wie folgt: Nach jedem Experiment wurde das Reaktionsgemisch in einem Fläschchen aufgefangen und tert-Butylmethylether (50 mL) 1 Minute lang im Zyklusmodus durch den Elektrolyseur gepumpt, um Verluste zu minimieren. Das Gleiche wurde mit 1 M Natronlauge (50 mL) gemacht. Im Anschluss wurde eine Säure-Base-Extraktion mit einem Perforator nach Ludwig durchgeführt. Dabei können hohe Rührgeschwindigkeiten leichter erreicht werden, wenn ein kleiner Rührstab eingesetzt wird. Zusätzlich sollte das Lösungsmittel in das Hauptfach aufgefüllt werden. Das gelbe basische Reaktionsgemisch wurde über Nacht mit MTBE extrahiert. Anschließend wurden die beiden Phasen getrennt und die wässrige Schicht mit 4,5 M H₂SO₄(aq) auf pH 1-2 angesäuert. Die Extraktion des neutralisierten Rohprodukts erfolgte dann in einem Perforator mit Ethylacetat. Die beiden organischen Fraktionen wurden über MgSO₄ getrocknet, das Lösungsmittel wurde unter niedrigem Druck entfernt und das Produkt mittels 13C Inverse Gated NMR mit 1,3,5-Trimethoxybenzol als internem Standard analysiert.

Zur Isolierung wurde das erhaltene Carbonsäuregemisch im Vakuum über eine Vigreux-Kolonne bei 10°-10⁻² mbar destilliert. Das Hauptprodukt wurde bei 180-220°C destilliert. Die verbleibende gelbe Farbe konnte durch Umkristallisation aus Heptan entfernt werden. Falls Ethylester der 3-Ethyladipinsäure vorhanden waren, wurde das Produktgemisch in Natronlauge (3M) gelöst, auf 80 °C erhitzt und 3 Stunden lang kräftig gerührt. Dann wurde das Gemisch in einem ausreichend großen Scheidetrichter mit tert-Butylmethylether (3 x ein Drittel des wässrigen Volumens) extrahiert, mit H₂SO₄(aq) (4,5 M) auf pH 2-3 angesäuert und mit Ethylacetat extrahiert. Die organische Fraktion wurde über MgSO₄ getrocknet, und nach Entfernung des Lösungsmittels wurden die Kristalle gewonnen. Eine zweite Umkristallisierung führte optisch zu einer höheren Reinheit.

Für das Parameter-DoE-Screening wurden vier Parameter variiert: die Konzentration des cyclischen Edukts c, die Reaktionstemperatur T, die Flussrate des Reaktionsmediums Φ sowie die Stromdichte j, wobei die entsprechenden Parametergrenzen in der nachstehenden Tabelle 1 wiedergegeben sind. Neben den gesetzten Parametergrenzen wurden auch Zentralpunktversuche durchgeführt. Alle Versuche wurden einmal wiederholt, um die Reproduzierbarkeit der Umsetzungen zu bestimmen, und die Reaktionsreihenfolge dieser 18 chemischen Versuche wurde randomisiert. Die Reaktion dauerte zwischen 0,9 und 2,3 Tagen. Quantitative NMR-Ausbeuten von nahezu 40 % wurden für das Zielprodukt (2") erzielt. Die maximale isolierte Ausbeute betrug 39 %. Die Nickelschaumanode wurde für alle hier berichteten Reaktionen wiederverwendet, wodurch sich der Abfallstrom verringerte.

**Tabelle 1: Parameter des DoE-Screenings. Die geometrische Stromdichte bezieht sich auf den Strom im Verhältnis zur geometrischen anodischen Oberfläche des anodischen Schaums - 108 cm2. Reaktionsbedingungen: 1 M NaOH(aq), Wasser, Aktivierung = 7,5 mA cm⁻² (geometrische Stromdichte), Aktivierung = 10 C cm⁻², 9 F. Die Durchflussrate der Reaktion Φ ist eine kumulierte Durchflussrate beider Röhren. Jeder Parameter hat drei Datenpunkte.**

| **Parameter** | **Untere Grenze** | **Mittlerer Wert** | **Obere Grenze** |
|---|---|---|---|
| Temperatur der Reaktionsmischung, *T* | 25.0 °C | 37.5 °C | 50.0 °C |
| Konzentration von 4-Ethylcyclohexanol, *c* | 0.2 M | 0.35 M | 0.5 M |
| Durchflussrate der Reaktion, *Φ* | 10 mL min⁻¹ | 30 mL min⁻¹ | 50 mL min⁻¹ |
| geometrische Stromdichte, *j* | 3 mA cm⁻² | 4 mA cm⁻² | 5 mA cm⁻² |

Es wurde festgestellt, dass die Durchflussrate und die Konzentration des Edukts den größten Einfluss auf die Ausbeute an gewünschtem Produkt haben. Höhere Durchflussraten, insbesondere von 30 bis 50 mL min⁻¹ und niedrigere Konzentrationen des Edukts, insbesondere von 0,2 bis 0,35 M, wirken sich positiv auf die Ausbeute an 3-Ethyladipinsäuren aus.

Das analysierte Produktspektrum ist der untersuchten Oxidation von 4-Ethylcyclohexanol ist nachstehend wiedergegeben:

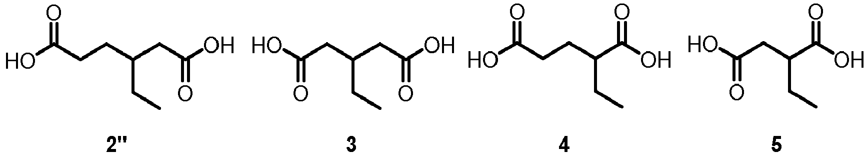

Strukturen von 3-Ethyladipinsäure (2"), 3-Ethylglutarsäure (3), 2-Ethylglutarsäure (4) und Ethylbernsteinsäure (5).

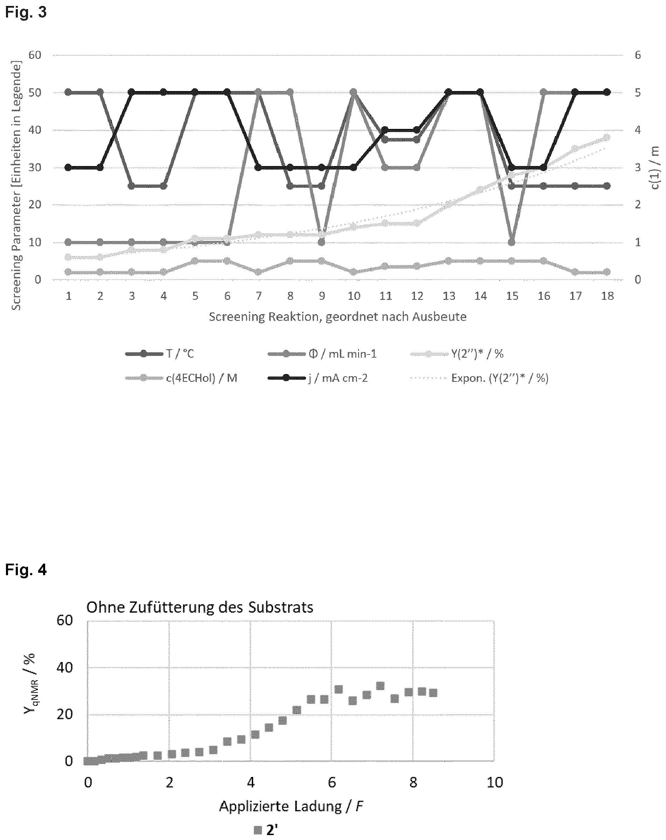

Eine graphische Auswertung der Parameter-Ergebnisse mit einer Auftragung entsprechend der qNMR-Ausbeuten von 3-Ethyladipinsäure (2) ist in Figur 3 wiedergegeben. Die getesteten Parameter sind Reaktionstemperatur T (25 °C, 37,5 °C und 50 °C), Flussrate des Reaktionsgemischs Φ (10 mL min-1, 30 mL min-1 und 50 mL min-1), Konzentration von 4 Ethylcyclohexanol c(1) (0,2 m, 0,35 m und 0,5 m) und applizierte Reaktions-Stromdichte j (3,0 mA cm-2, 4,0 mA cm-2 und 5,0 mA cm-2).

Das Screening ergab, dass eine besondere Kombination der getesteten vier Parameter zu den höchsten Ausbeuten führt, nämlich eine Flussgeschwindigkeit von 50 mL min⁻¹, eine Reaktionstemperatur von 25 °C, eine Stromdichte j von 5,0 mA cm⁻² und eine Edukt-Konzentration von 0,2 mol/l. Damit konnten Ausbeuten an dem gewünschten Produkt (2") von deutlich über 30% erreicht werden.

Mit diesen Parametern ergaben sich die besten quantitativen NMR-Ausbeuten der Produkte wie folgt:
YqNMR (3-Ethyladipinsäure) = 38%
YqNMR (3-Ethylglutarsäure) = 4%
YqNMR (2-Ethylglutarsäure) = 4%,
YqNMR (Ethylbernsteinsäure) = 1%.

Nach dem Aufarbeitungsverfahren wurde 2" mit einer Ausbeute von 38 % isoliert. Dies ist die effizienteste Isolierung von 2" nach einer elektrochemischen Synthese, über die bisher berichtet wurde.

Charakterisierung von 3-Ethyladipinsäure (2")

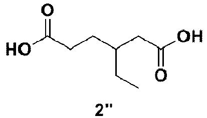

2" wurde elektrochemisch nach dem oben beschriebenen Verfahren aus 4-Ethylcyclohexanol (6,41 g, 50 mmol, 0,2 M) synthetisiert. Das Produkt 2" wurde durch Säure-Base-Extraktion, Vakuumdestillation und Umkristallisation aus n-Heptan als hellgelber kristalliner Feststoff erhalten (3,31 g, 19 mmol, 38 %).

¹H NMR (600 MHz, DMSO-d6): δ [ppm] = 12.04 (s, 2H), 2.18 (t, J = 7.9 Hz, 2H), 2.12 (d, J = 6.9 Hz, 2H), 1.68 (hept, J = 6.5 Hz, 1H), 1.57 - 1.42 (m, 2H), 1.33 - 1.21 (m, 2H), 0.81 (t, J = 7.5 Hz, 3H).

¹³C NMR (151 MHz, DMSO-d6): δ [ppm] = 174.75, 174.29, 38.07, 35.41, 31.20, 28.17, 25.63, 10.69.

Schmelzpunkt: (47.4 - 49.8) °C.

HRMS (ESI+) m/z: berechnet für C8H14O4 + H+ 175.0965 [M+H+]+, gefunden: 175.0965.

### Beispiel 3:

Es wurde eine anodische Oxidation von 4-Propylcyclohexanol zu 3-Propyladipinsäure in der vorstehend beschriebenen Durchflusszelle durchgeführt und die Entwicklung der Ausbeute von der 3- Propyladipinsäure,im Reaktionsverlauf analysiert.

Figur 4 zeigt die qNMR Ausbeute-Änderung von 3-Propyladipinsäure im Verlauf der applizierten Ladung. Die qNMR Ausbeute wurde gegen den Standard 1,3,5-Trimethoxybenzol analysiert.

Die Bildung von 3-Propyladipinsäure wurde von der Bildung des 4-Propylcyclohexanons beeinflusst. 1 F nach der maximal verfügbaren Konzentration von 4-Propylcyclohexanon war die Produktionsrate von 3-Propyladipinsäure am größten. Das Endresultat war eine Ausbeute von über 30%.

Daran anschließend wurde die Reaktionsführung so geändert, dass 4-Propylcyclohexanon in einer möglichst stabilen Konzentration vorlag, damit die Produktionsrate von 3-Propyladipinsäure konstant gehalten wurde. Dafür wurde das Edukt konstant zugeführt, abgestimmt auf die Produktionsrate von 3-Propyladipinsäure.

Überraschenderweise wurde auch hier eine hohe Ausbeute des gewünschten Produktes beobachtet. Diese Vorgehensweise hat somit einen positiven Einfluss auf die Ausbeute hat und ermöglicht ferner eine kontinuierliche Reaktionsführung.

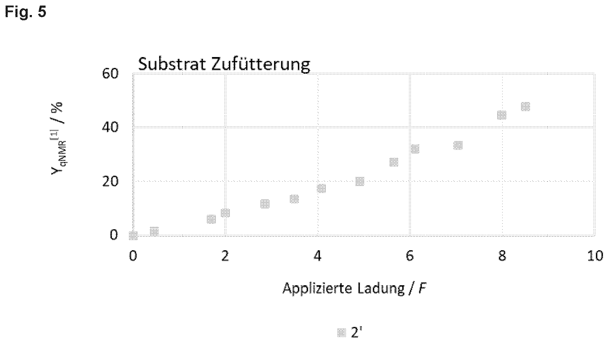

Die qNMR Ausbeute-Änderung von 3-Propyladipinsäure bei Zuführung von 4-Propylcyclohexanon im Verlauf der applizierten Ladung ist in der Figur 5 wiedergegeben.

### Bezugszeichenliste:

- 1: Durchflusselektrolysezelle
- 2: selbststehender Rahmen und Käfig für die Elektrode
- 3: Mischer
- 4: Emulsion
- 5: Edelstahl-Elektrode
- 6: Nickelschaumelektrode
- 7: Nickel-Plattenelektrode
- 8: Kühlkreislauf
- 9: Kühlkreislauf
- 10: Kühlkreislauf
- 11: Pumpe

## Patentansprüche

1. Ein Verfahren zur elektrochemischen Aktivierung von Metallelektroden umfassend die Schritte
(a) in Kontakt bringen der Metallelektrode mit Base und
(b) Aktivierung der gemäß Schritt (a) vorbehandelten Metallelektrode, vorzugsweise ohne Umpolung der Metallelektrode.

2. Das Verfahren nach Anspruch 1, wobei die Metallelektrode 0 bis 100 Gew.-% Nickel und 100 bis 0 Gew.-% Cobalt, jeweils bezogen auf den Gesamtgehalt von Nickel und Cobalt in der Elektrode,
oder
10 bis 100 Gew.-% Nickel und 0 bis 90 Gew.-% Eisen aufweist, jeweils bezogen auf den Gesamtgehalt von Nickel und Eisen in der Elektrode.

3. Das Verfahren nach Anspruch 1 oder 2, wobei die Metallelektrode eine Ni(O)OH-Schaumelektrode ist, wobei die Ni(O)OH-Schaumelektrode als Metall insbesondere mindestens zu 80 Gew.-%, bevorzugt mindestens 85, 90, 95, 98 oder 99 Gew.- %, besonders bevorzugt mindestens 99,9, insbesondere bevorzugt mindestens 99,99 Gew.-% Nickel enthält, jeweils bezogen auf den Metallgehalt der Ni(O)OH-Schaumelektrode.

4. Das Verfahren nach mindestens einem der vorhergehenden Ansprüche, wobei die Metallelektrode durch in Kontakt bringen mit Base, vorzugsweise wenigstens einer anorganischen Base und/oder wenigstens einer organischen Base vorbehandelt wird, wobei vorzugsweise eine oder mehrere Basen eingesetzt werden, die unabhängig voneinander ausgewählt sind aus der Gruppe bestehend aus N(R^{A})₄OH, N(R^{A})₄acetat, mit R^{A} jeweils unabhängig voneinander H oder C₁₋₄-Alkyl, linear oder verzweigt, NaOH, Natriumacetat, KOH, Kaliumacetat, LiOH, Lithiumacetat, Na₂CO₃, K₂CO₃ und Li₂CO₃, besonders bevorzugt ausgewählt aus der Gruppe bestehend aus NaOH und KOH.

5. Das Verfahren nach Anspruch 4, wobei die Base in wässriger Lösung eingesetzt wird, insbesondere in einer Konzentration der Base von 10 mM bis 10 M, bevorzugt 0,2 bis 5 M, besonders bevorzugt 0,5 bis 1,5 M, ganz besonders bevorzugt 1 ± 0,1 M.

6. Das Verfahren nach mindestens einem der vorhergehenden Ansprüche, wobei das in Kontakt bringen der Metallelektrode mit der Base bei einer Temperatur von 10 bis 40°C, vorzugsweise bei 18 bis 27°C erfolgt.

7. Das Verfahren nach mindestens einem der vorhergehenden Ansprüche, wobei eine Aktivierung der gemäß Schritt (a) vorbehandelten Metallelektrode durch eines oder mehrere Salze von Nickel und/oder Cobalt und gegebenenfalls Eisen, besonders bevorzugt durch Salze, die ausgewählt sind aus der Gruppe bestehend aus Ni₂SO₄ und/oder CoSO₄.

8. Das Verfahren nach Anspruch 7, wobei das Salz oder die Salze in wässriger basischer Lösung vorliegen, wobei eine oder mehrere Basen, vorzugsweise eine Base, unabhängig voneinander ausgewählt sind aus der Gruppe bestehend aus N(R^{A})₄OH, N(R^{A})₄acetat, mit R^{A} jeweils unabhängig voneinander H oder C₁₋₄-Alkyl, linear oder verzweigt, NaOH, Natriumacetat, KOH, Kaliumacetat, LiOH, Lithiumacetat, Na₂CO₃, K₂CO₃ und Li₂CO₃, besonders bevorzugt ausgewählt aus der Gruppe bestehend aus NaOH und KOH.

9. Das Verfahren nach einem der Ansprüche 7 oder 8, wobei die Aktivierung der Metallelektrode bei einer Temperatur von 10 bis 40°C, vorzugsweise bei 18 bis 27°C erfolgt.

10. Das Verfahren nach einem der Ansprüche 7 bis 9, wobei die Aktivierung der Metallelektrode bei einer Ladungsmenge von 2 bis 10 Coulomb, vorzugsweise 5 bis7 Coulomb erfolgt.

11. Aktivierte Metallelektrode, insbesondere erhältlich nach einem Verfahren gemäß einen oder mehreren der vorhergehenden Ansprüche.

12. Verwendung einer Metallelektrode nach Anspruch 11 zur Durchführung von Oxidationsreaktionen organischer Komponenten.

13. Verwendung einer Metallelektrode nach Anspruch 11 zur Durchführung von Oxidationsreaktionen zur Wasserelektrolyse.

14. Verwendung einer Metallelektrode nach Anspruch 11 in Batterien.

15. Verwendung einer Metallelektrode nach Anspruch 11 in der Katalyse.
